# EUROPEAN PATENT APPLICATION

(11) **EP 2 206 968 A2**
(43) Date of publication of application: **14.07.2010**
(21) Application number: 09180590.3
(22) Date of filing: 23.12.2009
(51) Int. Cl.: F23R 3/40, F02C 3/30, F02C 3/20

(54) **Pre-mix catalytic partial oxidation fuel reformer for gas turbine systems**

(30) Priority: 09.01.2009 US 351148
(71) Applicant: General Electric Company, Schenectady, NY 12345 (US)
(72) Inventor: Liu, Ke, Rancho Santa Margarita, CA 92688 (US); Haynes, Joel Meier, Niskayuna, NY 12304 (US); Watson, Rick Bruce, Missouri City, TX 77459 (US)
(74) Representative: Gray, Thomas

(57) **Abstract**

A gas turbine system (10) includes a fuel inlet configured to receive a fuel stream (18); an oxygen inlet configured to introduce a first oxygen-containing gas (32, 130); a fuel reformer system (12) comprising: a pre-mixing zone (34, 110) configured to mix a first portion (30, 121) of the fuel stream and the oxygen-containing gas in a pre-mixing device (200, 300, 402) to form a gaseous pre-mix (138); a diffuser (404) configured to provide a thermal shield between the pre-mixing zone and a catalytic partial oxidation zone; a catalytic partial oxidation zone (40, 114, 420) configured to receive the gaseous pre-mix, wherein the catalytic partial oxidation zone comprises a catalyst composition configured to react the fuel and the oxygen to generate a syngas (42, 126); and a dilution zone (116) configured to mix the syngas into a second portion (124) of the fuel stream to form a fuel mixture (48, 136); a gas turbine pre-mixer (16), configured to mix a second oxygen-containing gas (128) from a gas turbine compressor (14) with the fuel mixture; and a gas turbine combustor (20, 500) configured to combust the fuel mixture.

## Description

The invention relates generally to a fuel reformer system based on pre-mixed catalytic partial oxidation, and more particularly to a gas turbine system employing the fuel reformer system.

Fuel injection and mixing are critical to achieving efficient and clean combustion in gas turbine engines. In the case of gaseous fuels, it is desirable to obtain an optimal level of mixing between air, fuel, and combustion products in a combustion zone.

Exhaust gases from gas turbine engines contain substances such as nitrogen oxides (NOx) that are harmful regulated emissions. Hence, there has been increased demand for gas turbines that operate in partially pre-mixed (PP) or lean, pre-mixed (LP) modes of combustion in an effort to meet increasingly stringent emissions goals. PP and LP combustion reduces harmful emissions of NOx without loss of combustion efficiency.

However, combustion instabilities, also known as combustion dynamics, are commonly encountered in development of low emissions gas turbine engines. Combustion dynamics in the form of fluctuations in pressure, heat-release rate, and other perturbations in flow may lead to problems such as lean blow out, structural vibration, excessive heat transfer to a chamber, and consequently lead to failure of the system.

Reforming part of the fuel to hydrogen rich syngas, and then mixing the syngas into the fuel before the turbine combustion chamber is a solution to enhance the gas turbine turn capability by improving the combustion dynamics. One method employs a rich catalytic system to reform the fuel just prior to gas turbine premixing and is further integrated into the gas turbine fuel skid.

Briefly, according to one embodiment of the present invention, a gas turbine system is provided. The gas turbine system includes a fuel reformer system comprising: a fuel inlet configured to receive a fuel stream; an oxygen inlet configured to introduce an oxygen-containing gas; a pre-mixing zone configured to mix the fuel stream and the oxygen-containing gas in a pre-mixing device to form a gaseous pre-mix; wherein the pre-mixing device comprises a flow conditioning device configured to pre-condition the fuel stream, wherein the flow conditioning device is disposed upstream of the oxygen inlet; a diffuser disposed downstream of and in fluid communication with the flow conditioning device, wherein the diffuser is configured to provide a thermal shield to the gaseous pre-mix in the pre-mixing zone; a catalytic partial oxidation zone disposed downstream of and in fluid communication with the diffuser and configured to receive the gaseous pre-mix, wherein the catalytic partial oxidation zone comprises a catalyst composition configured to react the fuel and the oxygen to generate a syngas; and a dilution zone disposed downstream of and in fluid communication with the reaction zone and configured to mix the fuel back into the syngas to form a hydrogen-enriched fuel mixture a gas turbine pre-mixer configured to mix a oxygen-containing gas from a gas turbine compressor with the hydrogen-enriched fuel mixture; and a gas turbine combustor configured to combust the hydrogen-enriched fuel mixture.

In another embodiment, a method of operating a gas turbine system includes introducing a portion of a fuel stream into a pre-mixing zone of a fuel reformer system; introducing an oxygen-containing gas to the fuel stream in a flow conditioning device to facilitate pre-mixing of the fuel stream and oxygen to form a gaseous pre-mix; reacting the gaseous pre-mix in the presence of a catalyst composition in a catalytic partial oxidation zone to form a syngas through catalytic partial oxidation; introducing the syngas stream into the fuel stream to form a hydrogen-enriched fuel mixture; mixing the hydrogen-enriched fuel mixture with an oxygen-containing gas in a gas turbine pre-mixer; combusting the hydrogen-enriched fuel mixture in a gas turbine combustor; and producing electrical power with a gas turbine in operative communication with an electrical generator.

In yet another embodiment, a fuel reformer system comprises: a fuel inlet configured to receive a fuel stream; an oxygen inlet configured to introduce a first oxygen-containing gas; a pre-mixing zone configured to mix a first portion of the fuel stream and the oxygen-containing gas in a pre-mixing device to form a gaseous pre-mix; a diffuser disposed downstream of and in fluid communication with the pre-mixing zone, wherein the diffuser is configured to provide a thermal shield between the pre-mixing zone and a catalytic partial oxidation zone; a catalytic partial oxidation zone disposed downstream of and in fluid communication with the pre-mixing zone and configured to receive the gaseous pre-mix, wherein the catalytic partial oxidation zone comprises a catalyst composition configured to react the fuel and the oxygen to generate a syngas from the gaseous pre-mix; and a dilution zone disposed downstream of and in fluid communication with the catalytic partial oxidation zone and configured to mix the syngas into a second portion of the fuel stream to form a fuel mixture.

Referring now to the Figures, which are exemplary embodiments, and wherein the like elements are numbered alike:
FIG. 1 is a diagrammatical illustration of an exemplary embodiment of a gas turbine system having a pre-mix catalytic partial oxidation fuel reformer system;
FIG. 2 is a diagrammatical illustration of an exemplary embodiment of the pre-mix catalytic partial oxidation fuel reformer system of FIG. 1;
FIG. 3 is a diagrammatical illustration of another exemplary embodiment of the fuel reformer system of FIG. 1;
FIG. 4 is a schematic illustration of an exemplary embodiment of a pre-mixing device from the fuel reformer system of FIG. 3;
FIG. 5 is a cross-sectional view of another exemplary configuration of the pre-mixing device from the fuel reformer system of FIG. 3 comprising a plurality of counter swirling vanes;
FIG. 6 is another cross-sectional view of the exemplary embodiment of the pre-mixing device of FIG. 5;
FIG. 7 is a cross-sectional view of the fuel reformer system of FIG. 3, specifically showing the catalytic partial oxidation zone and the reaction zone; and
FIG. 8 is a cross-sectional view of an exemplary embodiment of a gas turbine combustor of the gas turbine system of FIG. 1.

As described in detail below, embodiments of the present disclosure provide a gas turbine system incorporating a fuel reformer system and a method of providing the same. The gas turbine system utilizes syngas formed by catalytic partial oxidation. The syngas is generated by mixing and reacting a portion of the natural gas or fuel with air to increase a concentration of hydrogen. The syngas can then be mixed with the natural gas or fuel and sent to the gas turbine combustor. Introduction of hydrogen into the natural gas or fuel allows lowering of a lean blow out point and enhances the combustion dynamics. Gas turbine turndown can be reduced below 40% by the addition of hydrogen to the fuel as compared to a system that does not introduce additional hydrogen to the fuel.

Lowering of the lean blow out point permits the flow rate to the gas turbine to be further turned down when demand for electricity is low, thereby saving fuel and reducing emissions. The term "lean blow out point" used herein refers to a point of loss of combustion in a combustor. Variations in fuel composition and flow disturbances result in a loss of combustion in sufficiently lean flames. The term "combustion dynamics" used herein refers to fluctuations in air pressure, temperature, heat release and unsteady flow oscillations that affect operation of the gas turbine. It is desirable to operate the gas turbine system with a highly reactive fuel component, such as hydrogen, to help limit loss of combustion. Moreover the fuel reformer system disclosed herein is compact in size and of reduced complexity. Existing gas turbine systems, therefore, can easily be retrofitted to include the generator at a low cost and without significantly impacting the size of the gas turbine system.

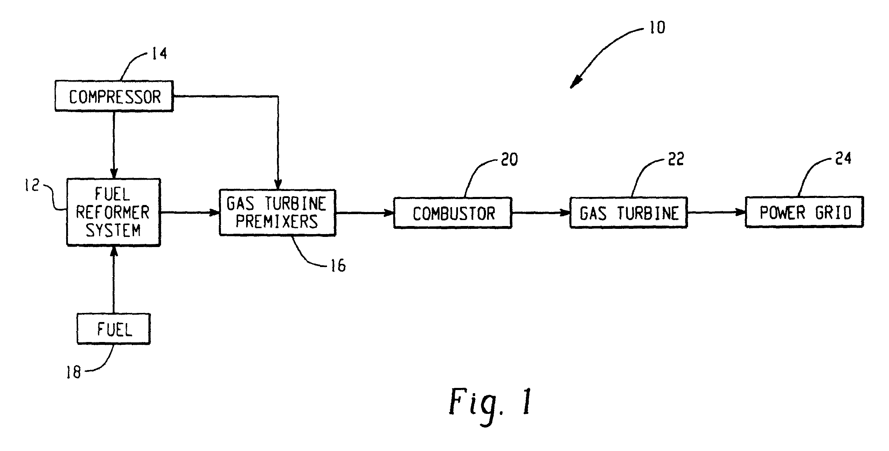

Turning now to FIG. 1, a block diagram illustrating an exemplary embodiment of a gas turbine system 10 is shown. The gas turbine system 10 includes a fuel reformer system 12 for doping the hydrogen into the fuel of the gas turbine. A compressor 14 is in fluid communication with both the fuel reformer system 12 and the gas turbine pre-mixers 16. The compressor 14 is configured to supply air to both the fuel reformer system 12 and the pre-mixers 16. A fuel stream 18 is also in fluid communication with the fuel reformer system 12. As will be discussed in greater detail below, the fuel and air combine and react in the fuel reformer system 12 to form the syngas, which can then be combined with more fuel and sent to the gas turbine pre-mixers 16. The syngas and fuel is further mixed with air from the compressor 14, and the entire pre-mixed fuel is fed to a combustor 20. The pre-mixed fuel is combusted in the combustor 20 and expanded in the gas turbine 22. The turbine is driven by the combustion and expansion, and the energy is converted to electricity, where it can be sent to a power grid 24 to provide power, or can be stored and used at a later time.

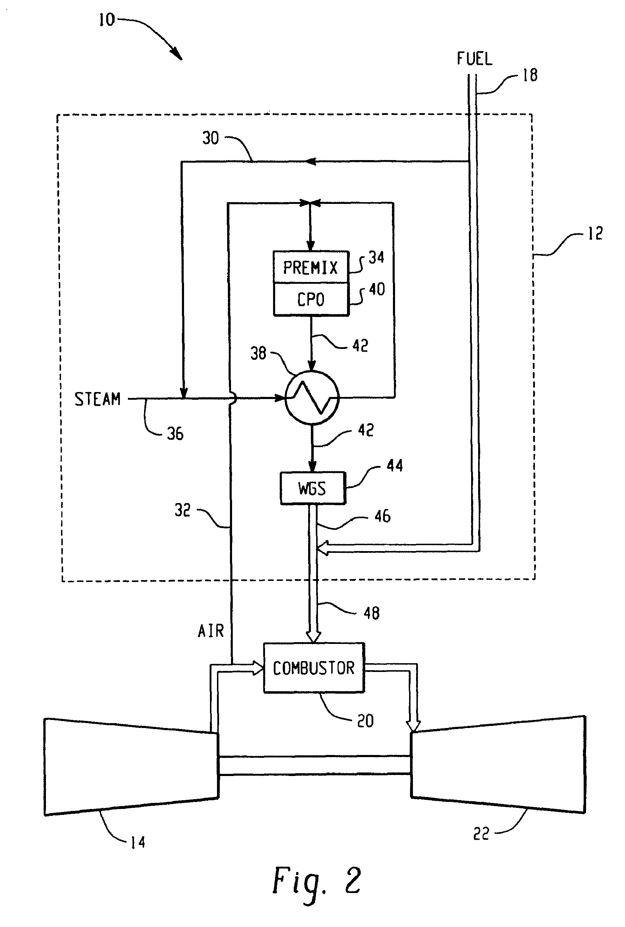

FIG. 2 further illustrates an exemplary embodiment of the fuel reformer system 12 of FIG. 1. A fuel slipstream 30 is split from the main fuel stream 18 is combined with a slipstream of oxygen-containing gas 32 from the gas turbine compressor 14 and sent to a premixing zone 34 of the fuel reformer system 12. As used herein, the term "oxygen-containing gas" is generally used to refer to any oxidant suitable for mixing with the fuel to form a hydrogen-enriched fuel mixture. Exemplary oxygen-containing gases can include, without limitation, air, pure oxygen (O₂), oxygen-enriched air, oxygen and steam containing combustion exhaust, and the like.

In an optional embodiment, the fuel slipstream 30 can be combined with steam 36 and fed through a heat exchanger 38 configured to pre-heat the fuel slipstream 30 prior to mixing with the oxygen-containing gas slipstream 32 in the premixing zone 34. The pre-heated fuel slipstream 30, with optional steam 36, can then be premixed with the oxygen-containing gas 32 in the premixing zone 34. In another embodiment, the steam can be a component of the fuel slipstream 30 or the oxygen-containing gas slipstream 32, rather than being a separate supply stream as illustrated in FIG. 2.

The fuel and oxygen-containing gas are mixed to form a gaseous premix, which is immediately fed into a catalytic partial oxidation reactor 40. The gaseous premix undergoes a catalytic partial oxidation reaction and a syngas 42 is formed. The syngas 42 can be cooled when it is diluted with the fuel stream 18 to form a hydrogen-enriched fuel mixture, or it can be cooled with steam. When the optional heat exchanger 38 is present in the fuel reformer system 12, the syngas 42 can be cooled by passing through the heat exchanger down to a temperature of about 250 degrees Celsius (°C) to about 450 °C, specifically about 325 °C to about 375 °C. Cooling the syngas 42 is particularly advantageous when an optional water gas shift (WGS) reactor 44 is present in the fuel reformer system 12. The WGS reactor 44 can be disposed downstream of the catalytic partial oxidation reactor 40, and in this case, downstream of the heat exchanger 38. The WGS reactor 44 can be configured to further increase a concentration of hydrogen in the syngas by reacting steam with carbon monoxide in the syngas to form more hydrogen. The hydrogen-enriched syngas 46 can then be recombined with the fuel stream 18 to form a fuel mixture 48, which can be fed to the combustor 20 of the gas turbine system 10.

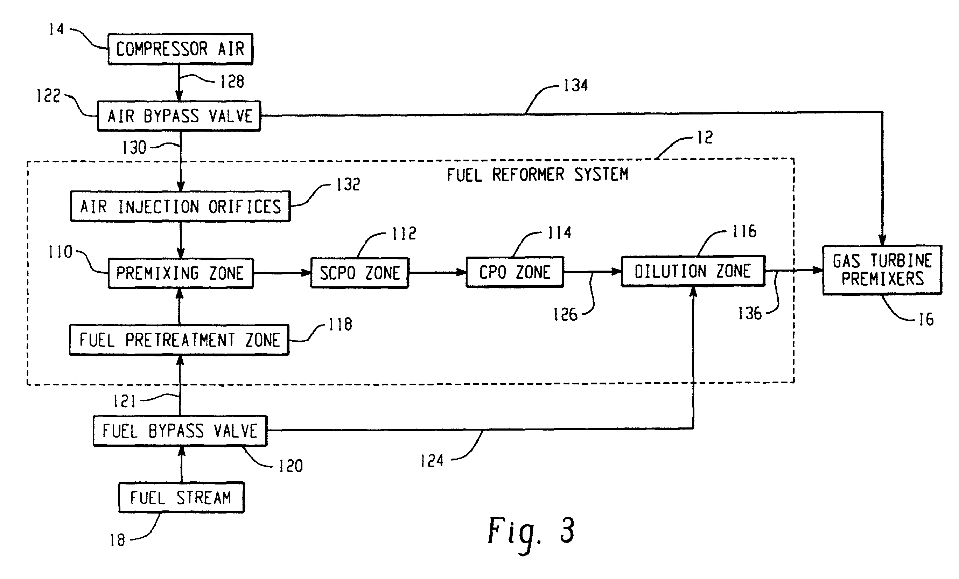

FIG. 3 is another block diagram illustrating another exemplary embodiment of the fuel reformer system 12 of FIG. 1. The fuel reformer system 12 includes a pre-mixing zone 110, a selective catalytic partial oxidation (SCPO) zone 112, a CPO zone 114, and a dilution zone 116. The fuel stream 18, which can be pressurized before entering the gas turbine system, can be preconditioned in a pretreatment zone 118. In various embodiments, the fuel can be pre-mixed with water or steam, can be preheated, can be preconditioned by means of a fuel swirler, flow enhancer, turbulence generator, or the like, disposed in the zone, can be filtered to reduce the level of impurities, such as sulfur, in the fuel, and other like preconditioning means in the pretreatment zone 118. A fuel bypass valve 120 can be disposed in fluid communication between the fuel stream source 18 and the fuel pretreatment zone 118. The fuel bypass valve 120 can be configured to send a desired portion 121 of the fuel stream to pretreatment and pre-mixing zones of the syngas generator to be used in generation of hydrogen content in the system. The remainder 124 of the fuel stream 18 can be directed by the fuel bypass valve 120 to the dilution zone 116, where the remainder of the fuel stream 124 can combine with the syngas 126 generated in the CPO zone 114.

Similarly, air 128 from the compressor 14 can be directed by an air bypass valve 122 disposed in fluid communication with the compressor 14, the fuel reformer system 12, and the gas turbine pre-mixers 16. A portion 130 of the air can be sent to the pre-mixing zone 110 for mixture with the fuel. As will be described in greater detail, the air 130 can be fed into the pre-mixing zone 110 via air injection orifices 132 disposed about the pre-mixing zone 110. Optionally, the system can further include a boost compressor 140 between and in fluid communication with the air bypass valve 122 and the air injection orifices 132. The boost compressor 140 is configured to increase the pressure of the air stream 130 entering the pre-mixing zone 110 to further increase the mixing dynamics of the fuel and the air in the zone. The remainder 134 of the compressor air not utilized by the fuel reformer system 12 is diverted by the bypass valve 122 to the gas turbine pre-mixers 16, wherein the air 134 is pre-mixed with the fuel mixture 136 before being fed to the combustor 20 in the gas turbine system 10.

The fuel portion fed to the pre-mixing zone 110 is allowed to mix with the air 130 from the compressor 14. The gaseous pre-mix 138 is fed over a selective catalytic partial oxidation catalyst in the CPO zone. The catalyst is configured to convert the air and fuel into hydrogen and carbon monoxide. The air and fuel are allowed to react in the CPO zone 114 to generate a gaseous mixture of syngas 126, comprising primarily the hydrogen and carbon monoxide. In one embodiment, the syngas 126 includes hydrogen, carbon monoxide, nitrogen, and water. The CPO zone 114 can have any residence time suitable for forming the syngas from a particular ratio of fuel and air. In one embodiment, the CPO zone 114 can have a residence time of less than about 500 milliseconds (ms), specifically less than about 200 ms. The term "residence time" refers to a period of time during which the fuel and air react in the CPO zone. In one embodiment, the air and fuel can be mixed in the pre-mixing zone 110 in rich proportions. As used herein, the term "rich proportions" refers to a stoichiometric ratio of the number of oxygen atoms in the air to the number of carbon atoms in the fuel of about 0.6 to about 1.6.

After the CPO zone 114, the syngas 126 travels to the dilution zone 116, wherein the syngas 126 can be combined with the fuel remainder stream 124. The hydrogen in the syngas 126 can be diluted by the added fuel; and the warm, hydrogen-enriched fuel mixture 136 can be fed to the gas turbine pre-mixers 16, wherein the hydrogen-enriched fuel is further mixed with oxygen and injected into a combustor of the gas turbine system.

As mentioned, the fuel reformer system 12 described herein is a compact, low cost system. In one embodiment, the system 12 can have a size equivalent to that of a single nozzle combustor in a standard 90-nozzle gas turbine machine. In a specific embodiment, the syngas generator system 12 can have an area equal to about 0.1 to about 0.9 of an area of the gas turbine combustor 20. The compact size of the syngas generator system described herein makes it suitable for being retrofitted onto existing gas turbine systems. The retrofit system reforms the existing fuel supply for the gas turbine. Not only, therefore, does the fuel reformer system 12 improve the combustion dynamics of the gas turbine system 10, but it does so without the need to outlay the capital costs associated with buying an entirely new gas turbine system. Another advantage of the retrofit system is that it can be serviced without interfering with the gas turbine operation. For example, the retrofit fuel reformer system could be taken off line and serviced (e.g., catalyst changed), and the fuel supply is allowed to bypass the system, thereby preventing interruption to the gas turbine operation.

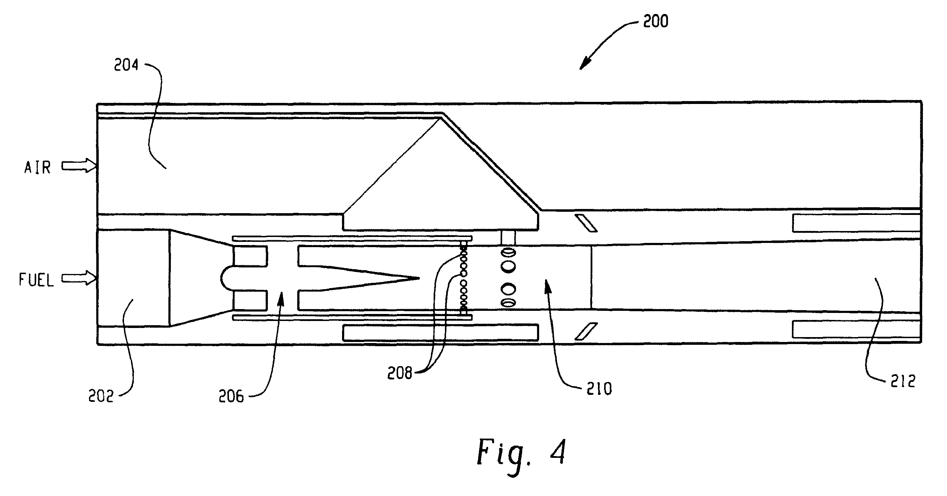

FIG. 4 is a schematic illustration of an exemplary embodiment 200 of a pre-mixing device, which can be employed in the pre-mixing zone of a fuel reformer system in a gas turbine. In the illustrated embodiment, the pre-mixing device 200 includes a fuel inlet 202 configured to introduce a fuel stream into the pre-mixing device 200. In addition, the pre-mixing device 200 includes an air inlet 204 configured to introduce oxygen thereto. Further, a pre-mixing device 206 is employed to pre-condition the fuel stream prior to introduction of oxygen thereto. As seen in this embodiment, the flow-conditioning device comprises the pretreatment zone of the fuel reformer system and is disposed within the pre-mixing zone itself. The pre-mixing device 206 can include a plurality of swirler vanes configured to provide a swirl movement to the fuel stream. Alternatively, or in addition, the pre-mixing device 206 can include a nozzle configured to accelerate the fuel stream to a desired velocity. In other embodiments, various types of other flow conditioning devices for pre-conditioning the fuel stream can be envisaged.

In operation, the fuel stream is pre-conditioned via the plurality of swirler vanes of the pre-mixing device 206. Further, oxygen can be introduced in a substantially transverse direction to the direction of injection of the fuel stream via the air inlet 204.

The air can be injected at a location 208 through a plurality of holes or injection orifices disposed downstream of the plurality of swirler vanes, through a plurality of holes disposed on each of the plurality of swirler vanes, and/or through a center body or walls of the pre-mixing device 200. A pressure drop across the plurality of holes for introducing the air can be less than about 5%. In one embodiment, air can be injected at an angle that has a component perpendicular to the direction of flow. Furthermore, the injection holes can also introduce swirl around the axis of the center body of the pre-mixing device 200. The pre-conditioned fuel stream and air are mixed in a pre-mixing region 210 to form a gaseous pre-mix that is further directed to CPO zone (not shown) for catalytic partial oxidation through an exit 212. In the illustrated embodiment, the pre-mixing region 210 is designed to resist flame holding even in the presence of an ignition source by minimizing recirculation zones.

In the pre-mixing device 200, the temperature of the fuel stream can be about 100°F (38°C) to about 1,300°F (704°C) and the temperature of air can be about 500°F (260°C) to about 1,400°F (760°C). Further, the ratio of an effective area of the air inlet 204 to an effective area of the flow-conditioning device 206 is about 0.1 to about 0.5. Pre-mixing device 206 can be configured to introduce the fuel stream into the premixing region. As used herein, the term 'effective area' of the air inlet is intended to refer to the volumetric flowrate of the air through the inlet divided by the average velocity of the air.

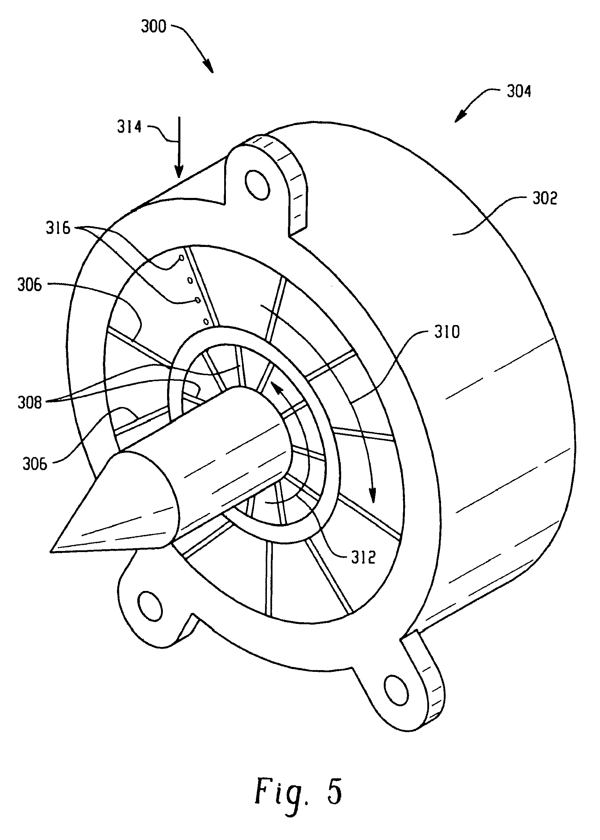

FIG. 5 is a schematic illustration of another exemplary embodiment of a pre-mixing device 300. FIG. 5 represents an alternative design of the pre-mixing device. As illustrated, the pre-mixing device 300 includes a fuel inlet 302 to introduce the fuel stream 304 into the pre-mixing device 300. Further, the pre-mixing device 300 includes a plurality of swirler vanes 306 to provide a swirl movement to the fuel stream 304. Additionally, the pre-mixing device 300 includes a plurality of counter flow swirl vanes 308 disposed adjacent to the plurality of swirler vanes 306. The direction of movement of the swirl and counter flow swirl vanes 306 and 308 is represented by reference numerals 310 and 312 respectively. In this exemplary embodiment, the fuel stream 304 flows from the inlet 302 upstream of the swirler vanes 306. Further, oxygen 314 is introduced through a plurality of holes 316 disposed on the swirler vanes 306.

The total effective area for the plurality of holes 316 is about 1/2 of the effective area of the swirler vanes 306 for the design of the pre-mixing device 300. Further, the number of swirler vanes 306 can be about 4 to about 15. Similarly, the number of counter flow swirler vanes 308 can be about 4 to about 15. Additionally, the turning angle for each of the swirler vanes 306 and 308 can be about 20 degrees to about 50 degrees. In one embodiment, the turning angle of the counter flow swirler vanes 308 is relatively greater than the turning angle of the swirler vanes 306. As described earlier, the fuel stream 304 is pre-conditioned through the swirler vanes 306 and 308, and oxygen 314 is pre-mixed with the pre-conditioned fuel stream to form a gaseous pre-mix that is directed to the CPO and CPO zones (see FIG. 1).

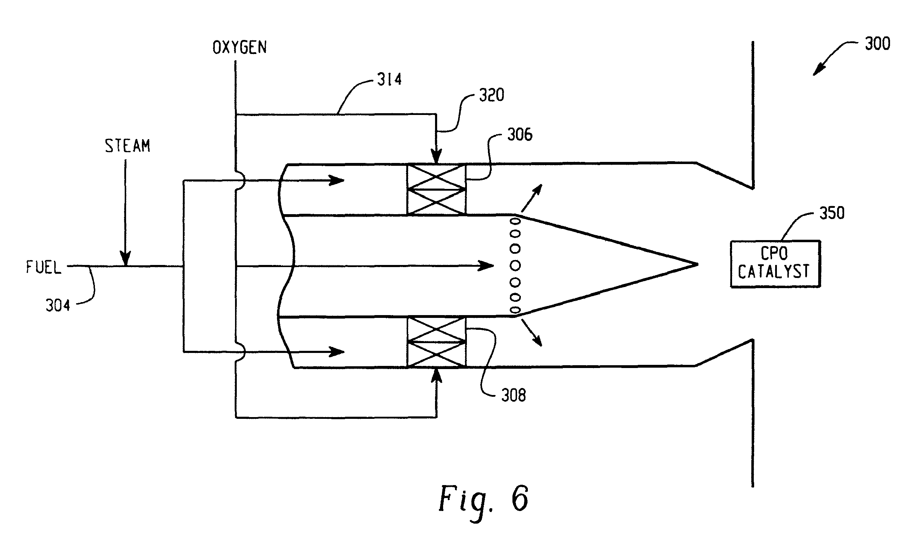

FIG. 6 is a schematic illustration of another cross-sectional view of the pre-mixing device 300 of FIG. 5. In this exemplary embodiment, the fuel stream 304 is introduced and is pre-conditioned via the swirler vanes 306. Further, the pre-mixing device 300 also includes counter flow swirl vanes 308 disposed adjacent to the plurality of swirler vanes 306. As illustrated, oxygen 314 is introduced through a wall 320 of the pre-mixing device 300 and into swirler vanes 306. The oxygen 314 is mixed with the pre-conditioned fuel stream 304 to form the gaseous pre-mix, which is subsequently fed over the CPO catalyst 350 and catalytically converted to syngas. It should be noted that the mixing region could be either straight or converging. Further, oxygen 314 can also be introduced through the center body with an aerodynamic tip to prevent flow separation. In some embodiments, the shape and design of the pre-mixing device 300 can be effective in acting as a thermal shield for the CPO catalyst. As a thermal shield, the pre-mixing device conical shape can help to keep a high velocity of the gaseous pre-mix in the premixing zone to prevent combustion from traveling upstream into the premixing zone.

The pre-mixing device designs described above advantageously provide more uniform mixing of the reactants (fuel and oxygen) before reaching the catalyst of the CPO zone. This permits the gaseous pre-mix to be pre-heated to a higher temperature, thereby improving the efficiency of the CPO reactor of the CPO zone. In one embodiment, the gaseous pre-mix can be preheated to a temperature of about 300 °C to about 500 °C, specifically about 350 °C to about 450 °C, and more specifically about 375°C to about 425°C (e.g., about 400 °C). In some embodiments the hot oxygen-containing gas slipstream from the gas turbine compressor is enough to heat the fuel and oxygen mixture in the premixing zone. In another embodiment, the fuel slipstream can be preheated, for example, with a heat exchanger (as shown in FIG. 2).

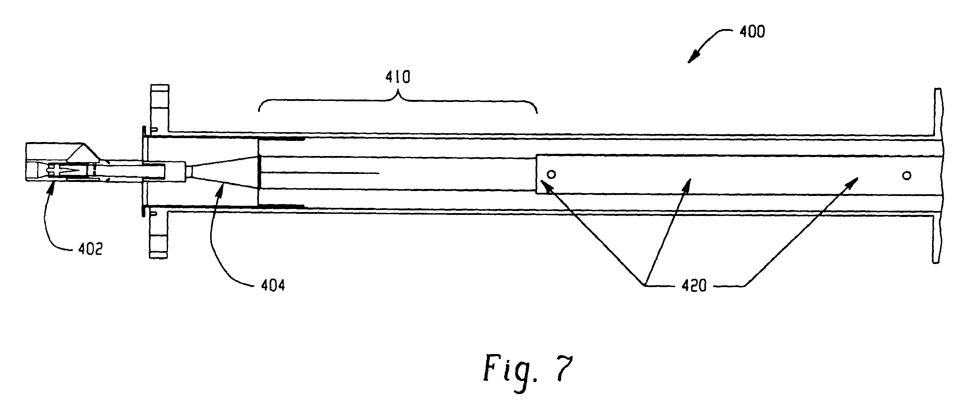

Turning now to FIG. 7, another schematic illustration of a fuel reformer system 400 is shown. FIG. 7 shows an example 402 of the pre-mixing devices disclosed above in fluid communication with a catalyst zone 410. In this embodiment, a diffuser 404 is disposed downstream of the pre-mixing device and upstream of the catalyst zone 410. The diffuser 404 is configured to shield the gaseous premix from the catalyst. The diffuser 404 is further configured to keep the velocity of the gaseous premix exiting the premixing device 402 higher than that of the catalyst zone 410. The flame from the catalyst zone 410, therefore, is prevented from traveling upstream into the pre-mixing device.

The catalyst zone 410 is in further fluid communication with a CPO zone 420. Disposed downstream of the CPO zone 420, can be a dilution zone (not shown). The gaseous pre-mix from the pre-mixing zone 402 can be fed over a catalyst disposed in the catalyst zone 410. The catalyst can be configured to convert the air and fuel into hydrogen and carbon monoxide. The catalyst zone 410 can be arranged coaxially with the axis of the tubular CPO zone 420. The CPO zone 420 can comprise a honeycomb structure of suitable catalyst support material, upon which the catalyst is coated; or the structure itself can comprise the catalyst. For example, the CPO zone can comprise a catalyst coated ceramic honeycomb monolith or a catalyst coated metallic honeycomb, or a ceramic honeycomb monolith containing catalyst. The honeycomb structure of the CPO zone can comprise a plurality of passages separated by catalyst-coated walls; and is not limited to honeycomb structures. The gaseous pre-mix can pass through these passages, over the catalyst, thereby starting the reaction for conversion to syngas. The catalyst can be any suitable material for promoting selective partial oxidation. Examples of catalysts can include, without limitation, platinum, palladium, rhodium, iridium, ruthenium, chromium oxides, cobalt oxides, cesium, nickel, iron, alumina, or combinations thereof, and other like catalysts suitable for promoting partial oxidation.

The CPO zone 420 is configured to provide the residence time necessary to produce the desired concentration of hydrogen from the fuel. The gaseous pre-mix flows through the catalyst system of the catalyst zone 410, and the pre-mix is converted thermally and/or catalytically. The hydrocarbon fuel of the gaseous pre-mix is partially oxidized by the air in the presence of the catalyst in the CPO zone 420, to produce a reaction product gas comprising hydrogen, carbon monoxide, water, carbon dioxide, and unburned hydrocarbon fuel. The CPO zone 420 provides further time for the partial oxidation reaction to continue before the formed syngas is cooled and diluted in the dilution zone. The primary reactions that occur over the catalyst in the catalyst zone 410, and further in the CPO zone 420, are indicated in reactions 1-3 below:

CH₄ + ½O₂ = CO + 2H₂; (1)

CH₄ + 2O₂ = CO₂ + 2H₂O (3)

The reactions are shown with methane (CH₄), the main constituent of natural gas. In other embodiments, other types of fuel can be employed in the fuel reformer system, and will depend on the gas turbine system in which the syngas is being generated. Other examples of fuels can include, without limitation, natural gas, methanol, ethanol, ethane, liquid petroleum gas (LPG), naphthas, typically virgin naphthas or cracked naphthas, such as, e.g., light naphthas, full range naphthas or even heavy naphthas, butane, propane, diesel fuel, kerosene, an aviation fuel, a coal derived fuel, a bio-fuel, gas oil, crude oil, an oxygenated hydrocarbon feedstock, refinery off gas, associated gas, combinations thereof, and the like. Again, the syngas resulting from the CPO reaction typically comprises hydrogen, carbon monoxide, carbon dioxide, and steam. In one embodiment, the syngas may also include a small amount of nitrogen (N₂). In some embodiments, the syngas can further comprise un-reacted fuel. The oxidant used in the disclosed systems can comprise any suitable gas containing oxygen, such as for example, air, oxygen-rich air or oxygen-depleted air, and the like.

The reaction to syngas can further comprise conventional steam reforming when steam is added to the fuel and oxygen, as mentioned above. In such an instance, the natural gas is converted to hydrogen following the reactions (4) and (5) as mentioned below.

CH₄ + H₂O ⇔ CO + 3 H₂ (4)

CO + H_{2O} ⇔ CO₂+H₂ (5)

The combustion and conversion of the substantially pre-mixed reactants in the fuel reformer system leads to a compact CPO zone 420 that achieves near-equilibrium composition and negligible formation of solid carbon in the CPO zone. The syngas formed in the CPO zone 420 can then travel downstream to the dilution zone (as shown in FIG. 3). The dilution zone is configured to cool down the syngas after reaction and to dilute the syngas with the gas turbine fuel. The hydrogen-enriched fuel mixture formed in the dilution zone can have a hydrogen concentration of about 25 dry volume percent (vol%) to 45 vol%, based on the total dry volume of the fuel mixture. As mentioned above, in cases where higher concentrations of hydrogen are desired, a WGS reactor can be advantageously employed to boost the hydrogen content of the syngas after the CPO zone.

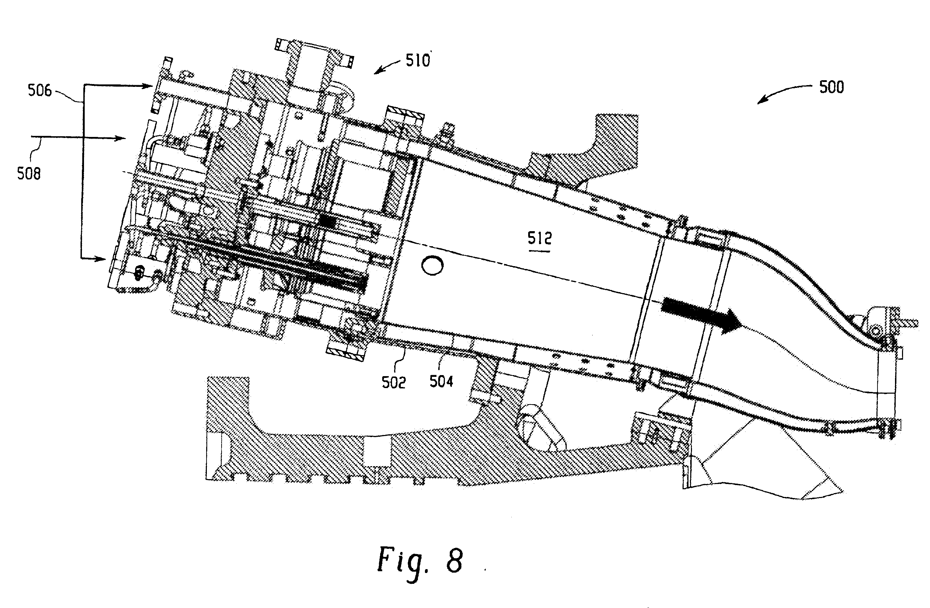

Referring back now to FIG. 3, the hydrogen-enriched fuel mixture is fed downstream from the fuel reformer system 12 to gas turbine pre-mixers 16. The hydrogen-enriched fuel mixture can help to lower the lean blow out point as well as to control the combustion dynamics of a gas turbine. The fuel reformer system provides a hydrogen-enriched fuel mixture, which can provide a way to achieve a sustained lean, pre-mixed or partially pre-mixed flame in the combustor of the gas turbine system, without lean blowout or combustion dynamics. The fuel-syngas mixture therefore, is fed to the pre-mixers of the gas turbine along with the rest of the fuel. FIG 8 is a schematic cross-sectional illustration of an exemplary gas turbine combustor 500. The combustor 500 includes a combustor housing 502 and a combustor liner 504 disposed within the housing 502. In operation, a fuel stream 506, which can include the hydrogen-enriched mixture from the fuel reformer system, can be introduced to the combustor and pre-mixed with more oxygen 508 from the compressor via a pre-mixing device (such as those shown in any of the previous figures). The pre-mixing device can be disposed within the gas turbine pre-mixing region 510 within the housing 502. In the illustrated embodiment, the fuel stream 506 is preconditioned through the pre-mixers. The fuel and oxygen are combusted in the combustion chamber 512 at elevated temperature and pressure. The combusted gas is compressed by the converging shape of the combustor 500 and travels to the turbine (not shown) where energy from the expansion of the compressed gas is used to drive a turbine.

The turbine can be connected to an electric generator configured to produce electricity from the gas turbine. In certain embodiments, a pilot flame such as a fuel nozzle with a relatively low degree of pre-mixing can be employed to initiate flame during start-up and to ensure stable combustion in the combustion chamber 512. It should be noted that the combustion of substantially pre-mixed fuel and oxygen when syngas is present can lead to reduced NOx generation, improved flame stability, and increased fuel efficiency.

Ranges disclosed herein are inclusive and combinable (e.g., ranges of "up to about 25 weight percent (wt%), or, more specifically, about 5 wt% to about 20 wt%", is inclusive of the endpoints and all intermediate values of the ranges of "about 5 wt% to about 25 wt%," etc.). "Combination" is inclusive of blends, mixtures, alloys, reaction products, and the like. Furthermore, the terms "first," "second," and the like, herein do not denote any order, quantity, or importance, but rather are used to distinguish one element from another, and the terms "a" and "an" herein do not denote a limitation of quantity, but rather denote the presence of at least one of the referenced item. The modifier "about" used in connection with a quantity is inclusive of the stated value and has the meaning dictated by context, (e.g., includes the degree of error associated with measurement of the particular quantity). The suffix "(s)" as used herein is intended to include both the singular and the plural of the term that it modifies, thereby including one or more of that term (e.g., the colorant(s) includes one or more colorants). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

While the invention has been described with reference to a preferred embodiment, it will be understood that various changes may be made and equivalents may be substituted for elements thereof without departing from the scope of the invention. In addition, many modifications may be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.

Various aspects and embodiments of the present invention are defined by the following numbered clauses:
1. A gas turbine system, comprising:
   a fuel inlet configured to receive a fuel stream;
   an oxygen inlet configured to introduce a first oxygen-containing gas;
   a fuel reformer system comprising:
      a pre-mixing zone configured to mix a first portion of the fuel stream and the oxygen-containing gas in a pre-mixing device to form a gaseous pre-mix;
      a diffuser disposed downstream of and in fluid communication with the pre-mixing zone, wherein the diffuser is configured to provide a thermal shield between the pre-mixing zone and a catalytic partial oxidation zone;
      a catalytic partial oxidation zone disposed downstream of and in fluid communication with the pre-mixing zone and configured to receive the gaseous pre-mix, wherein the catalytic partial oxidation zone comprises a catalyst composition configured to react the fuel and the oxygen to generate a syngas from the gaseous pre-mix; and
      a dilution zone disposed downstream of and in fluid communication with the catalytic partial oxidation zone and configured to mix the syngas into a second portion of the fuel stream to form a fuel mixture;
      a gas turbine pre-mixer configured to mix a second oxygen-containing gas from a gas turbine compressor with the fuel mixture; and
      a gas turbine combustor configured to combust the fuel mixture.
2. The system of Clause 1, wherein the pre-mixing zone comprises a pre-mixing device comprising a plurality of swirler vanes configured to provide a swirl movement to the fuel stream first portion.
3. The system of any preceding Clause, further comprising a steam inlet configured to introduce steam to the pre-mixing device.
4. The system of any preceding Clause, further comprising a heat exchanger disposed downstream of and in fluid communication with the catalytic partial oxidation zone, wherein the heat exchanger is configured to simultaneously cool the syngas and pre-heat the first portion of the fuel stream.
5. The system of any preceding Clause, further comprising a water gas shift reactor disposed downstream of and in fluid communication with the catalytic partial oxidation zone, wherein the water gas shift reactor is configured to increase a hydrogen content of the syngas.
6. The system of any preceding Clause, wherein the first oxygen-containing gas is a portion of the second oxygen-containing gas.
7. The system of any preceding Clause, further comprising a control valve to control a volume flow rate of the first oxygen-containing gas according to an oxygen to carbon ratio of the catalytic partial oxidation zone.
8. The system of any preceding Clause, further comprising a control valve to control a volume flow rate of the first portion of the fuel stream.
9. A method of operating a gas turbine system, comprising:
   introducing a first fuel portion of a fuel stream into a pre-mixing zone of a fuel reformer system;
   introducing a first oxygen-containing gas to the first fuel portion in a flow conditioning device to facilitate pre-mixing of the first fuel portion and the first oxygen-containing gas to form a gaseous pre-mix
   reacting the gaseous pre-mix to form a syngas through catalytic partial oxidation;
   introducing the syngas into a second fuel portion of the fuel stream to form a fuel mixture;
   mixing the fuel mixture with a second oxygen-containing gas in a gas turbine pre-mixer; and
   combusting the fuel mixture in a gas turbine combustor.
10. The method of Clause 9, further comprising introducing steam into the pre-mixing zone.
11. The method of Clause 9 or 10, wherein the steam is combined with the first fuel portion.
12. The method of any of Clauses 9 to 11, wherein the combination of the steam and the first fuel portion is combined with the first oxygen-containing gas.
13. The method of any of Clauses 9 to 12, further comprising preheating the first fuel portion to a temperature of about 300°C to about 500°C.
14. The method of any of Clauses 9 to 13, further comprising cooling the syngas to a temperature of about 250°C to about 450°C.
15. The method of any of Clauses 9 to 14, further comprising increasing the hydrogen content of the syngas through a water gas shift reaction.
16. The method of any of Clauses 9 to 15, wherein the cooling occurs after the catalytic partial oxidation and before the water gas shift reaction.
17. A fuel reformer system, comprising:
   a fuel inlet configured to receive a fuel stream;
   an oxygen inlet configured to introduce a first oxygen-containing gas;
   a pre-mixing zone configured to mix a first portion of the fuel stream and the oxygen-containing gas in a pre-mixing device to form a gaseous pre-mix;
   a diffuser disposed downstream of and in fluid communication with the pre-mixing zone, wherein the diffuser is configured to provide a thermal shield between the pre-mixing zone and a catalytic partial oxidation zone;
   a catalytic partial oxidation zone disposed downstream of and in fluid communication with the pre-mixing zone and configured to receive the gaseous pre-mix, wherein the catalytic partial oxidation zone comprises a catalyst composition configured to react the fuel and the oxygen to generate a syngas from the gaseous pre-mix; and
   a dilution zone disposed downstream of and in fluid communication with the catalytic partial oxidation zone and configured to mix the syngas into a second portion of the fuel stream to form a fuel mixture.

## Claims

1. A gas turbine system (10), comprising:
a fuel inlet configured to receive a fuel stream (18);
an oxygen inlet configured to introduce a first oxygen-containing gas (32, 130);
a fuel reformer system (12) comprising:
a pre-mixing zone (34, 110) configured to mix a first portion (30, 121) of the fuel stream and the oxygen-containing gas in a pre-mixing device (200, 300, 402) to form a gaseous pre-mix (138);
a diffuser (404) disposed downstream of and in fluid communication with the pre-mixing zone, wherein the diffuser is configured to provide a thermal shield between the pre-mixing zone and a catalytic partial oxidation zone;
a catalytic partial oxidation zone (40, 114, 420) disposed downstream of and in fluid communication with the pre-mixing zone and configured to receive the gaseous pre-mix, wherein the catalytic partial oxidation zone comprises a catalyst composition configured to react the fuel and the oxygen to generate a syngas (42, 126) from the gaseous pre-mix; and
a dilution zone (116) disposed downstream of and in fluid communication with the catalytic partial oxidation zone and configured to mix the syngas into a second portion (124) of the fuel stream to form a fuel mixture (48, 136);
a gas turbine pre-mixer (16), configured to mix a second oxygen-containing gas (128) from a gas turbine compressor (14) with the fuel mixture; and
a gas turbine combustor (20, 500) configured to combust the fuel mixture.

2. The system (10) of Claim 1, wherein the pre-mixing zone (34) comprises a pre-mixing device (206, 300) comprising a plurality of swirler vanes (306) configured to provide a swirl movement to the fuel stream first portion (30, 121).

3. The system (10) of any preceding Claim, further comprising a steam inlet configured to introduce steam (36) to the pre-mixing zone (34).

4. The system (10) of any preceding Claim, further comprising a heat exchanger (38) disposed downstream of and in fluid communication with the catalytic partial oxidation zone (40), wherein the heat exchanger is configured to simultaneously cool the syngas (42) and pre-heat the first portion (30) of the fuel stream (18).

5. The system (10) of any preceding Claim, further comprising a water gas shift reactor (44) disposed downstream of and in fluid communication with the catalytic partial oxidation zone (40), wherein the water gas shift reactor is configured to increase a hydrogen content of the syngas (42).

6. The system (10) of any preceding Claim, further comprising a control valve (122) to control a volume flow rate of the first oxygen-containing gas according to an oxygen to carbon ratio of the catalytic partial oxidation zone (114).

7. The system (10) of any preceding Claim, further comprising a control valve (120) to control a volume flow rate of the first portion (121) of the fuel stream (18).

8. A method of operating a gas turbine system (10), comprising:
introducing a first fuel portion (30, 121) of a fuel stream (18) into a pre-mixing zone (34, 110) of a fuel reformer system (12);
introducing a first oxygen-containing gas (32, 130) to the first fuel portion in a pre-mixing device (206, 300) to facilitate pre-mixing of the first fuel portion and the first oxygen-containing gas to form a gaseous pre-mix (138);
reacting the gaseous pre-mix to form a syngas (42, 126) through catalytic partial oxidation;
introducing the syngas into a second fuel portion (124) of the fuel stream to form a fuel mixture (48, 136);
mixing the fuel mixture with a second oxygen-containing gas (134) in a gas turbine pre-mixer (16); and
combusting the fuel mixture in a gas turbine combustor (20, 500).

9. The method of Claim 8, further comprising introducing steam (36) into the pre-mixing zone (34) and combining the steam with the first fuel portion (30), wherein the combination is further combined with the first-oxygen containing gas (32).

10. The method of Claim 8 or Claim 9, further comprising increasing the hydrogen content of the syngas (42) through a water gas shift reaction.
